# EUROPEAN PATENT SPECIFICATION

(11) **EP 4 038 651 B1**
(45) Date of publication and mention of the grant of the patent: **04.11.2026**
(21) Application number: 20871093.9
(22) Date of filing: 30.08.2020
(51) Int. Cl.: H01G 11/32, H01G 11/60, H01G 11/62, H01M 10/0567, H01M 10/0568, H01M 10/0569, H01G 11/64

(54) **ELECTROLYTE FOR ELECTROCHEMICAL CAPACITOR**
ELEKTROLYT FÜR ELEKTROCHEMISCHEN KONDENSATOR
ÉLECTROLYTE POUR CONDENSATEUR ÉLECTROCHIMIQUE

(30) Priority: 30.09.2019 US 201962908515 P; 07.10.2019 US 201962911505 P; 07.10.2019 US 201962911508 P
(43) Date of publication of application: 10.08.2022
(73) Proprietor: South 8 Technologies, Inc., San Diego, California 92109 (US)
(72) Inventor: RUSTOMJI, Cyrus, S., San Diego, CA 92109 (US); LEE, Jungwoo, San Diego, CA 92109 (US); ROYER, James, San Diego, CA 92109 (US)
(74) Representative: Schlee, Alexander Richard
(86) International application number: PCT/US2020/048661
(87) International publication number: WO 2021/066976

(56) References cited:
- US-A1- 2016 261 005
- US-A1- 2016 261 005
- US-A1- 2017 125 175
- US-A1- 2017 125 175
- US-A1- 2018 068 803
- US-A1- 2019 139 714

## Description

Embodiments of the invention relate to compositions and chemical formulations of electrolytes for use in electrochemical energy devices, such as batteries and electrochemical capacitors.

### BACKGROUND

Electrochemical energy storage devices, such as batteries and double layer capacitors, utilize an ionic conducting electrolyte solution to carry charge between positive and negative electrodes. Typically, these electrolytes are a liquid at a standard room temperature of +20 °C and at a standard pressure (approximately 1.01325 bar). The electrolyte solutions use a mixture of some amount of solvent and salt and additional components.

Electrochemical energy storage devices, such as electrochemical capacitors, suffer from performance degradation at high voltages and high temperatures. Undesirable decomposition occurs with unstable electrolyte solvents or salts, which degrades device performance when under high voltage or high temperature. Typically, a common electrolyte, such as 1.0 M TEABF4 in acetonitrile solvent, will be limited to -40 to +65 °C and 2.7 V. Reaching lower temperatures of -60 °C and temperatures as high as +85 °C or voltages higher than 3.0 V without degradation is highly desirable. To do so requires advancements in electrolyte solvent and salt formulations.

From the US patent application US 2016/261005 A1, an electrochemical capacitor device according to the precharacterizing part of claim 1 is known.

From the US patent application US 2019/139714 A1, use of spiro-(1,1')-bipyrrolidinium tetrafluoroborate salts in non-aqueous electrolytes for an ultracapacitor is known.

From the US patent application US 2017/125175 A1, use of spiro-(1,1')-bipyrrolidinium tetrafluoroborate salts with an acetonitrile solvent in non-aqueous electrolytes for a high-voltage supercapacitor is known.

It is an object of the invention to provide an electrochemical energy storage device having minimal performance degradation at high voltages and high temperatures. These and other objects are achieved by the features in claim 1. Advantageous further embodiments are claimed in the dependent claim.

### BRIEF DESCRIPTION OF THE DRAWINGS

Figure 1 illustrates the structure of several salts that may be used in the present invention.
Figure 2 illustrates the discharge curves at various temperatures for an electrochemical device composed of 1.0 M SBPBF4 in difluoromethane.
Figure 3 illustrates the capacitance vs. discharge rate for an electrochemical device composed of 1.0 M SBPBF4 in difluoromethane at various temperatures.
Figure 4 illustrates the capacitance vs. time for an electrochemical device composed of 1.0 M SBPBF4 in difluoromethane, which was held at 2.7 V at +85 °C for 1500 hrs.
Figure 5 illustrates the DCR resistance vs. time for an electrochemical device composed of 1.0 M SBPBF4 in difluoromethane, which was held at 2.7 V at +85 °C for 1500 hrs.
Figure 6 illustrates the capacitance vs. discharge rate for an electrochemical device composed of 1.0 M TBABF4 in difluoromethane at various temperatures.
Figure 7 illustrates the capacitance vs. discharge rate for an electrochemical device composed of 0.3 M TEABF4 and 0.7 M TBABF4 in difluoromethane at various temperatures.
Figure 8 illustrates the capacitance vs. discharge rate for an electrochemical device composed of 0.3 M TEABF4 in difluoromethane at +20 °C.

### DETAILED DESCRIPTION

It is preferred to increase the voltage and capacity of electrochemical capacitors to maximize the energy stored in the device. In addition, the device must operate over a wide range of temperatures and have good high-power (fast charge or fast discharge) properties. While acetonitrile, an organic liquid, mixed with a TEABF4 (tetraethyl ammonium tetrafluoroborate) salt is most commonly used as an electrolyte for electrochemical capacitors, the device is commonly limited to 2.7 V and -40 to +65 °C temperature operation. Previously disclosed was a novel liquefied gas solvent, difluoromethane, mixed with various salts and shown to operate over a wide temperature range down to -60 °C; however, high temperature was limited to +65 °C, and did not have good high-power performance due to poor salt solubility and diffusion within the solvent.

Disclosed herein are previously undisclosed salts to be used in combination with liquefied gas electrolytes.

According to the invention, spiro-(1,1')-bipyrrolidinium tetrafluoroborate shows excellent solubility in liquefied gas electrolytes, notably difluoromethane, of at least 2.0 M as measured in various experiment. In one example, other salts such as dimethylpyrrolidinium tetrafluoroborate show excellent solubility in liquefied gas electrolytes. It would have been otherwise impossible to determine that the solubility of these salts in liquefied gas electrolytes was considerably higher than the common salts without careful experimentation. The unexpectedly high solubility is thought to be due to the unique structure of the cation, which has two ethyl groups joined together to make a highly soluble cation. It is seen that this type of structure on the cation can greatly improve the solubility in difluoromethane and in other liquefied gas solvents. Although the increase in solubility for these salts in traditional liquid solvents has been disclosed before, never has anybody attempted to check the solubility in a liquefied gas electrolyte as disclosed here. Further, the smaller size and molecular mass of the cation over the common tetraethylammonium cation allow for higher conductivity in the electrolyte and higher cell capacitance, as it allows access to even smaller nanopores inside the carbon electrode. According to the invention, using spiro-(1,1')-bipyrrolidinium tetrafluoroborate salt in an electrochemical capacitor device leads to unexpectedly high performance over a broad temperature range from -60 to +85 °C with excellent charge and discharge rates and capacity retention. Previous work with common salts, such as tetraethylammonium tetrafluoroborate and tetrabutylammonium tetrafluoroborate, showed poor power performance at low temperatures. This is due to salt precipitation at these low temperatures. In contrast, according to the invention, the unexpectedly high solubility of spiro-(1,1')-bipyrrolidinium tetrafluoroborate allows for still very good performance at low temperatures. In another example, dimethylpyrrolidinium tetrafluoroborate exhibts very good performance at low temperatures. This performance would have impossible to determine without careful experimentation. Further, according to the invention, the cell with spiro-(1,1')-bipyrrolidinium tetrafluoroborate shows an unexpectedly excellent life under accelerated life testing at 2.7 V and +85 °C, which is unattainable in conventional electrochemical capacitors. In another example, a cell with dimethylpyrrolidinium tetrafluoroborate also shows unexpectedly excellent life under these conditions. Although in conventional liquid-based electrolytes (ex. acetonitrile) these salts have shown improved voltage 3.0 V at +65 °C, none have been shown to have the simultaneous capability to operate at 2.7 V at a high temperature of +85 C and maintain high power at a low temperature as low as -60 °C. This indicated surprisingly favorable results for the stability of both the salt and the solvent system.

According to the invention, the electrochemical energy storage device relates to an electrochemical capacitor. According to the invention, the electrochemical capacitor also includes a housing that encloses two conducting electrodes and the ionically conducting electrolyte. According to the invention, the liquefied gas solvent has a vapor pressure above an atmospheric pressure of 100 kPa at a room temperature of 293.15 K. In some such embodiments, the liquefied gas solvent may be capable of being placed under a compressive pressure equal to, or greater than, the liquefied gas solvent's vapor pressure at a temperature when the compressive pressure is applied, thereby keeping the liquefied gas solvent in a liquid phase.

In some embodiments, one or both of the conducting electrodes can be composed of carbon material such as activated carbon, graphite, carbon black, graphene, carbon nanotubes. Additionally, in some embodiments electrodes may contain binder material such as PVDF, SBR, CMC, PTFE. In some embodiments, electrodes may be coated on current collector material such as aluminum, copper, nickel, titanium. In some embodiments, the current collector may be a foil, a mesh, or a foam type material.

In some embodiments, the electrochemical device is an electrochemical energy storage device such as an electrochemical capacitor as described in PCT/US2014/066015, PCT/US2017/29821, PCT/US2019/032414, and PCT/US2019/032413.

According to the invention, the liquefied gas solvent comprises of difluoromethane. In another example, the liquefied gas solvent comprises fluoromethane. In another example, the liquefied gas solvent comprises 1,1-difluoroethane. In another example, the liquefied gas solvent comprises a mixture of fluoromethane and difluoromethane. In another example, the liquefied gas solvent comprises a mixture of 1,1-difluoroethane and difluoromethane. In another example, the liquefied gas solvent comprises a mixture of fluoromethane and 1,1-difluoroethane. In another example, the liquefied gas solvent comprises a mixture of fluoromethane, difluoromethane, and 1,1-difluoroethane. In one example, the ratio of the two component mixed solvent system can be about 99:1, 98:2, 95:5, 90:10, 80:20, 70:30, 60:40, 50:50, 40:60, 30:70, 20:80, 10:90, 5:95, 2:98, 1:99 by weight of any two liquefied gas solvents fluoromethane, difluoromethane, and 1,1-difluoroethane. In one example, the ratio of the three-component mixed solvent system can be about 1:1:1, 1:2:2, 1:3:3, 2:1:2, 2:2:1, 1:2:3, 1:3:2, 2:3:2, 1:3:3 for the three liquefied gas solvents fluoromethane, difluoromethane, and 1,1-difluoroethane.

In some embodiments, the one or more salts can be comprised of positively charged cation spiro-(1,1')-bipyrrolidinium paired with negatively charged anions such as acetate, bis(fluorosulfonyl)imide, bis(oxalate)borate, bis(trifluoromethanesulfonyl)imide, bromide, chloride, dicyanamide, diethyl phosphate, hexafluorophosphate, hydrogen sulfate, iodide, methanesulfonate, methyl-phophonate, tetrachloroaluminate, tetrafluoroborate, and trifluoromethanesulfonate. In other examples, the one or more salts can be comprised of those with positively charged cations such as tetramethylammonium, tetraethylammonium, tetrapropylammonium, tetrabutylammonium, triethylmethylammonium ammonium, 1,1-dimethylpyrrolidinium, and 1,1-diethylpyrrolidinium paired with negatively charged anions such as those listed.

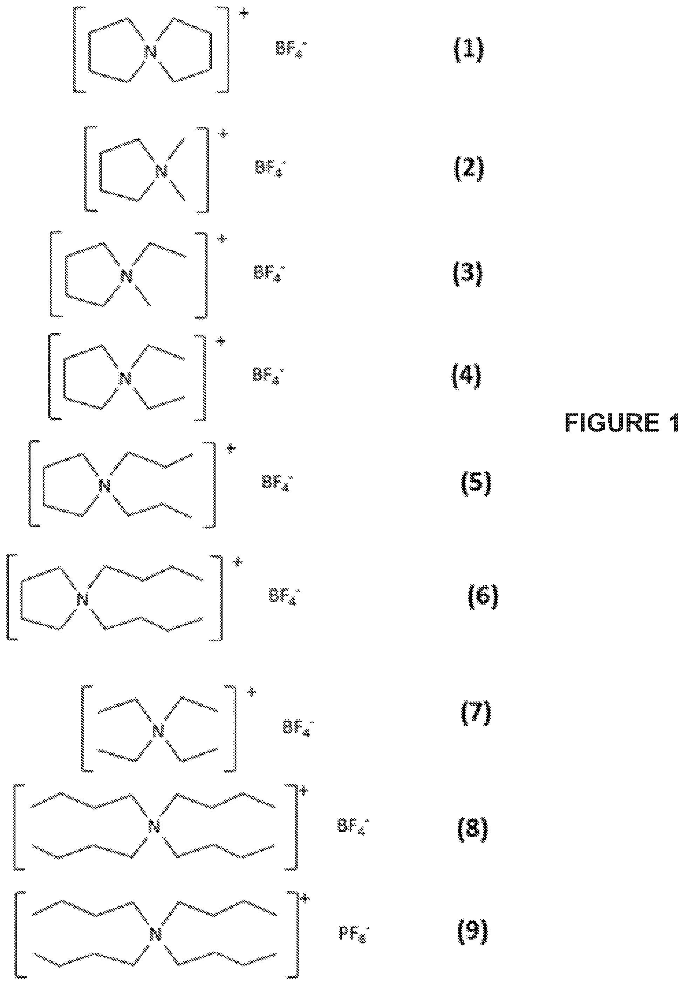

According to the invention, the salt is composed of spiro-(1,1')-bipyrrolidinium tetrafluoroborate (SBPBF4), having the structure (1). In another example, the salt is composed of dimethylpyrrolidinium tetrafluoroborate (DMPBF4) having the structure (2). In another example, the salt is composed of ethylmethylpyrrolidinium tetrafluoroborate (EMPBF4) having the structure (3). In another example, the salt is composed of diethylpyrrolidinium tetrafluoroborate (DEPBF4) having the structure (4). In another example, the salt is composed of dipropylpyrrolidinium tetrafluoroborate (DPPBF4) having the structure (5). In another example, the salt is composed of dibutylpyrrolidinium tetrafluoroborate (DBPBF4) having the structure (6). In another example, the salt is composed of tetraethylammonium tetrafluoroborate (TEABF4), having the structure (7). In another example, the salt is composed of tetrabutylammonium tetrafluoroborate (TBABF4), having the structure (8). In another example, the salt is composed of tetrabutylammonium hexafluorophosphate (TBAPF6), having the structure (9). These nine structures are shown in Figure 1.

In another embodiment, the positively charged cations used in salt (1) may be used with a plurality of negatively charged anions such as acetate, bis(fluorosulfonyl)imide, bis(oxalate)borate, bis(trifluoromethanesulfonyl)imide, bromide, chloride, dicyanamide, diethyl phosphate, hexafluorophosphate, hydrogen sulfate, iodide, methanesulfonate, methyl-phophonate, tetrachloroaluminate, tetrafluoroborate, and trifluoromethanesulfonate. In other examples, any of the positively charged cations used in salts (2)-(9) may be used may be used with the plurality of named negatively charged anions.

In one example, the salt in the liquefied gas solvent can be about 0.001, 0.01, 0.1, 0.2, 0.3, 0.4, 0.5, 0.6, 0.7, or 0.8 molar concentration. In some embodiments, the salt in the liquefied gas solvent can be about 1.0, 1.1, 1.2, 1.3, 1.4, 1.5, 1.6, 1.7, 1.8, 1.9, 2.0, 2.5, or 3 molar concentration. In another embodiment, the one or more salt can be used at any such concentration to form an electrolyte with a salt mixture. In one example, this could be 0.7 M SBPBF4 and 0.3M TEABF4 in difluoromethane. In another example, this could be 0.5 M SBPBF4 and 0.5 M TBABF4 in difluoromethane. In another example, this could be 0.3 M SBPBF4 and 0.7 M TBAPF6 in difluoromethane. According to the invention, this is 1.0 M SBPBF4 in difluoromethane. In another example, this could be 1.0 M TBAPF6 in difluoromethane. In another example, this could be 0.3 M TEABF4 in difluoromethane. In another example, this could be 1.0 M DMPBF4 in difluoromethane.

Alternative or additional examples described herein provide an electrolyte composition comprising one or more of the features of the foregoing description or of any description elsewhere herein.

Alternative or additional examples described herein provide a device comprising one or more of the features of the foregoing description or of any description elsewhere herein.

Alternative or additional examples described herein provide a method of using the electrolyte composition or device comprising one or more of the features of the foregoing description or of any description elsewhere herein.

One of skill in the art will understand that the terms "one or more salts," "one or more solvents" (including "liquefied gas solvents" and "liquid solvents"), and "one or more additives," as used herein in connection with "the ionically conducting electrolytes," can refer to one or to a plurality of electrolyte components.

### EMBODIMENT 1

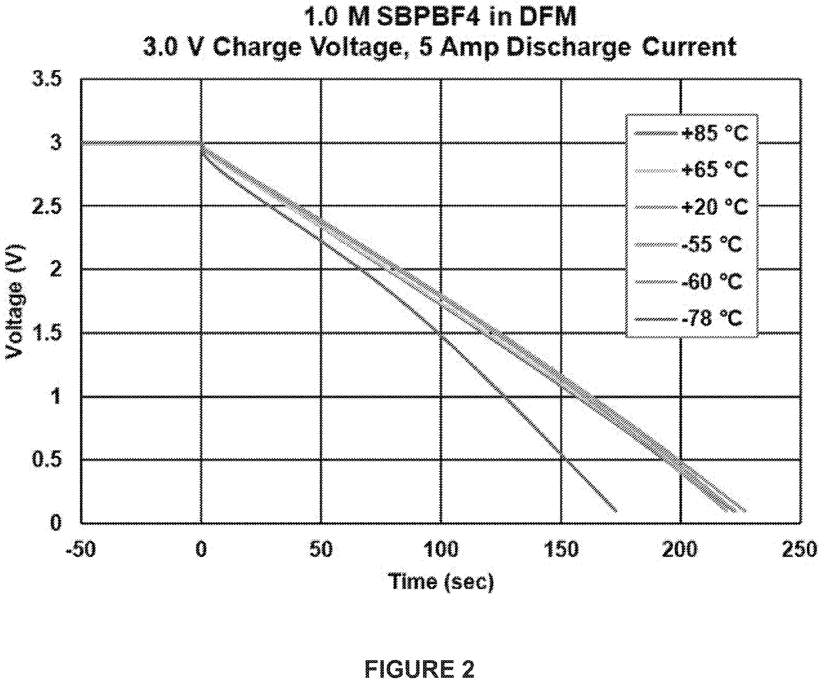

An electrochemical capacitor device was tested with a liquefied gas electrolyte composed of 1.0 M SBPBF4 in difluoromethane (DFM). The device was charged to 3.0 V for 60 minutes and was discharged at a rate of 5 A at various temperatures. It performed well from +85 °C to -55 °C with little change in capacitance or impedance over that temperature range. It showed some capacitance loss at lower temperatures of -78 °C, yet still showed superior performance at low temperatures when compared to state-of-art electrochemical capacitors. Most surprising is the ability for the capacitor to perform well at 3.0 V and +85 °C for short amounts of time. This unexpected performance is superior to that of state-of-art capacitors, which show rapid degradation when held at 3.0 V and +85 °C even for a few minutes or hours. This has applications in areas where short-term high temperature is expected. The performance metrics are described in Table 1 below, and the discharge curves are shown in Figure 2.

**TABLE 1**

| **1.0 M SBPBF4 in DFM** | | |
|---|---|---|
| **Temperature (°C)** | **DCR (mΩ)** | **Capacitance (F)** |
| +85 °C | 3.18 | 399.9 |
| +65 °C | 3.64 | 408.4 |
| +20 °C | 3.56 | 412.8 |
| -55 °C | 3.51 | 411.6 |
| -78 °C | 6.61 | 330.6 |

### EMBODIMENT 2

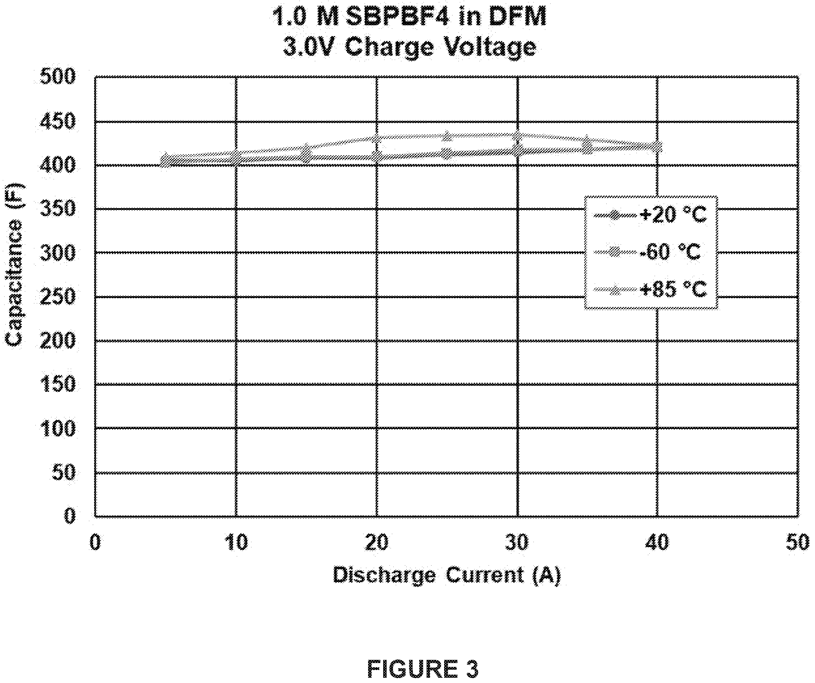

An electrochemical capacitor device was tested with a liquefied gas electrolyte composed of 1.0 M SBPBF4 in difluoromethane (DFM). The device was tested at various discharge rates up to 40 Amp at - 60, +20, and +85 °C. There is no appreciable change in capacitance over the currents tested at each temperature, indicating high performance at each temperature. The capacitance vs. temperature data at each temperature are plotted in Figure 3.

### EMBODIMENT 3

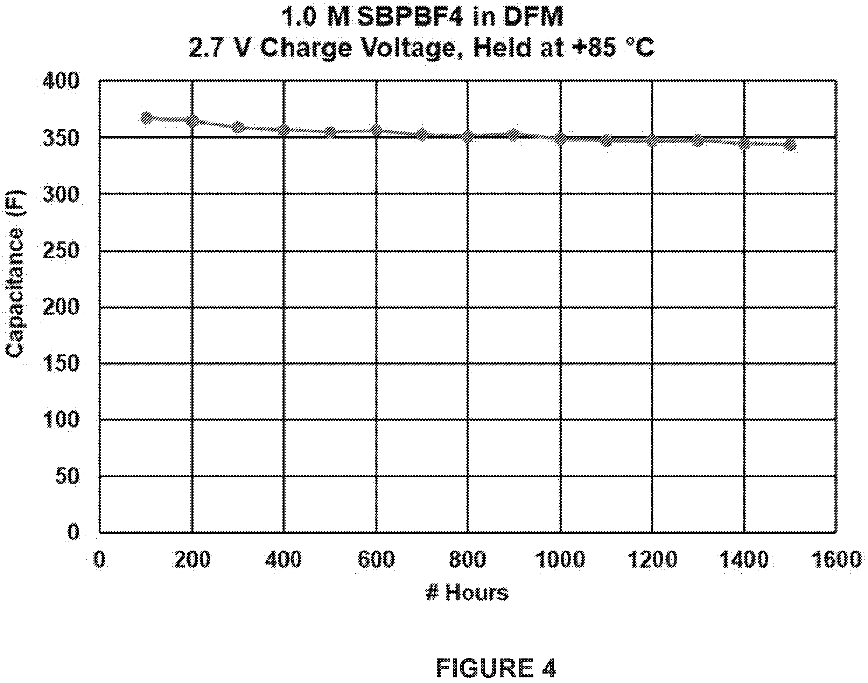

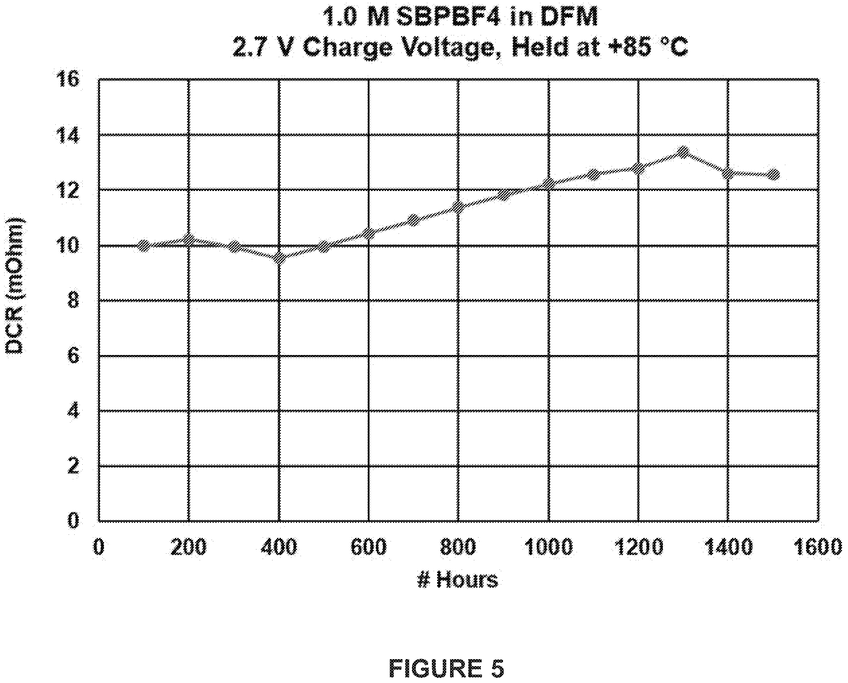

An electrochemical capacitor device was tested with a liquefied gas electrolyte composed of 1.0 M SBPBF4 in difluoromethane (DFM). The device was accelerated life tested at 2.7 V and at +85 °C. The device was held at this temperature for the duration of the test and was discharged at 100-hour intervals to check capacitance, followed immediately by charge back to 2.7 V. Capacitance and DCR vs time data is shown in Figures 4 and 5, respectively. The capacitance of the tested device dropped ~7%, and DCR (resistance) rose ~26% over 1500 hours of testing. Generally, a cell passes this "DC Life" test with <20% drop in capacitance and <50% increase in DCR. This surprising result shows excellent stability of the SBPBF4 salt and difluoromethane liquefied gas solvent system. Never before has another electrolyte shown this combination of 2.7 V at +85 °C performance over 1500 hrs. It would not be obvious to those skilled in the art that the same salt used in other solvents (ex. acetonitrile) would perform so well in a new liquefied gas solvent, such as difluoromethane. It would require experiment testing to show this performance, and disclosed here for the first time, it is shown that this unique combination of salt and solvent enhances the device's performance significantly.

### EXAMPLE 1

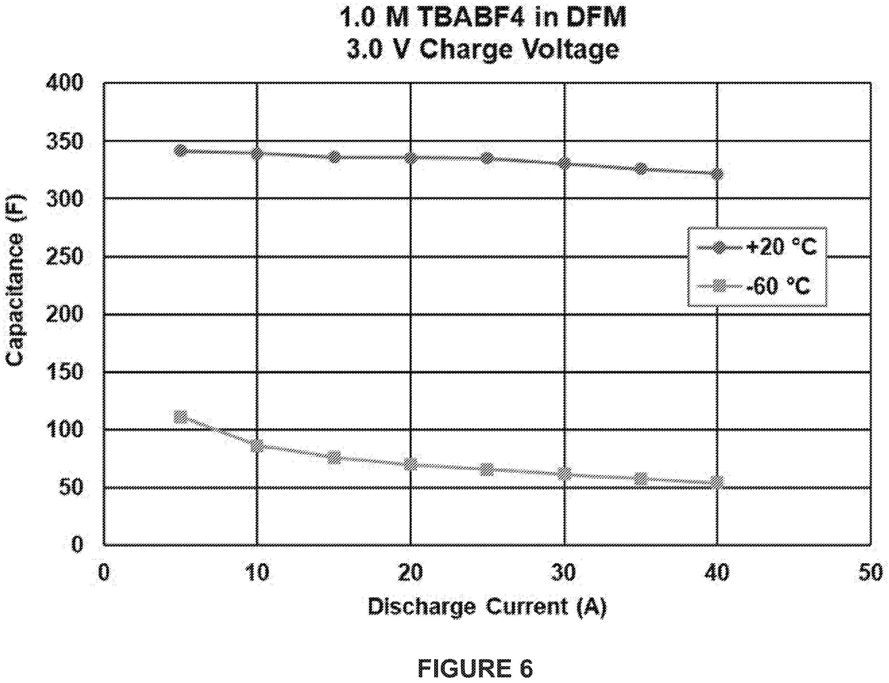

As a comparative test, an electrochemical capacitor device was tested with a liquefied gas electrolyte composed of 1.0 M TBABF4 in difluoromethane (DFM). The device was tested at various discharge rates up to 40 A at -60 and +20 °C. While there is a 6% drop in capacitance from 5 A to 40 A discharge at +20 °C, there is significant drop in capacitance at lower temperatures. Capacitance vs. discharge current at each temperature is shown in Figure 6. The cell performed very poorly with high DCR at a temperature of -60 °C. This shows that it is neither the liquefied gas solvent difluoromethane nor the good solubility of the salt that is required for good low temperature performance, but also the correct combination of salt and solvent, as it is in the case with the disclosed SBPBF4 salt and difluoromethane solvent. Further, when compared to the performance shown in Figure 3, the capacitance of the SBPBF4 salt vs. that of the TBABF4 salt is higher. This is because the small size of the cation is able to access more nanopores on the carbon electrode, increasing the device capacitance. These different metrics would not obvious unless experimentation was conducted to determine actual cell performance.

### EXAMPLE 2

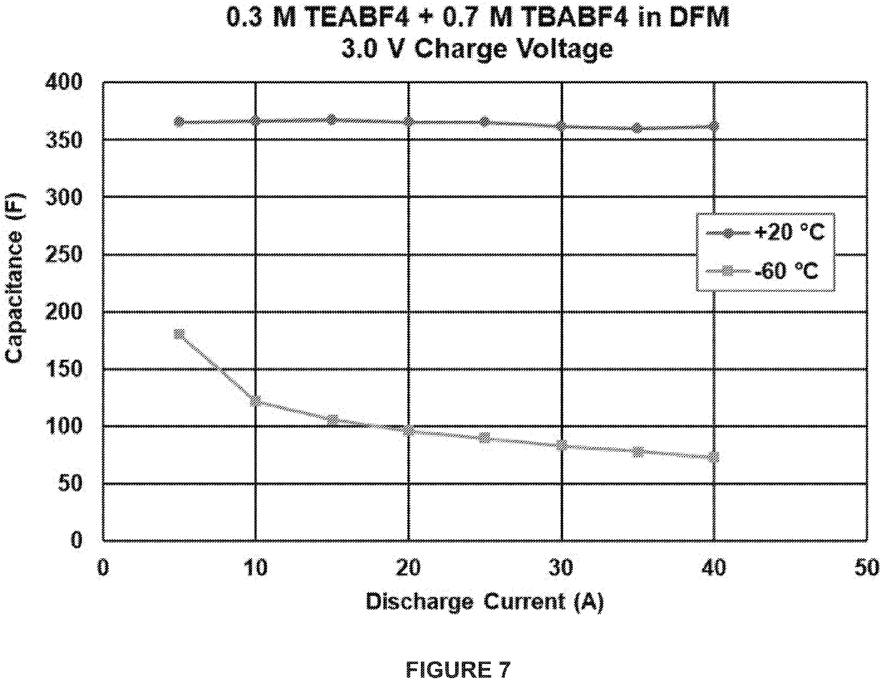

As a comparative test, an electrochemical capacitor device was tested with a liquefied gas electrolyte composed of 0.3 TEABF4 and 0.7 M TBABF4 in difluoromethane (DFM). The device was tested at various discharge rates up to 40 A at -60 and +20 °C. While there is a little to no drop in capacitance from 5 A to 40 A discharge at +20 °C, there is significant drop in capacitance at lower temperatures. Capacitance vs. discharge current at each temperature is shown in Figure 7. The cell performed very poorly with high DCR at a temperature of +85 °C.

### EXAMPLE 3

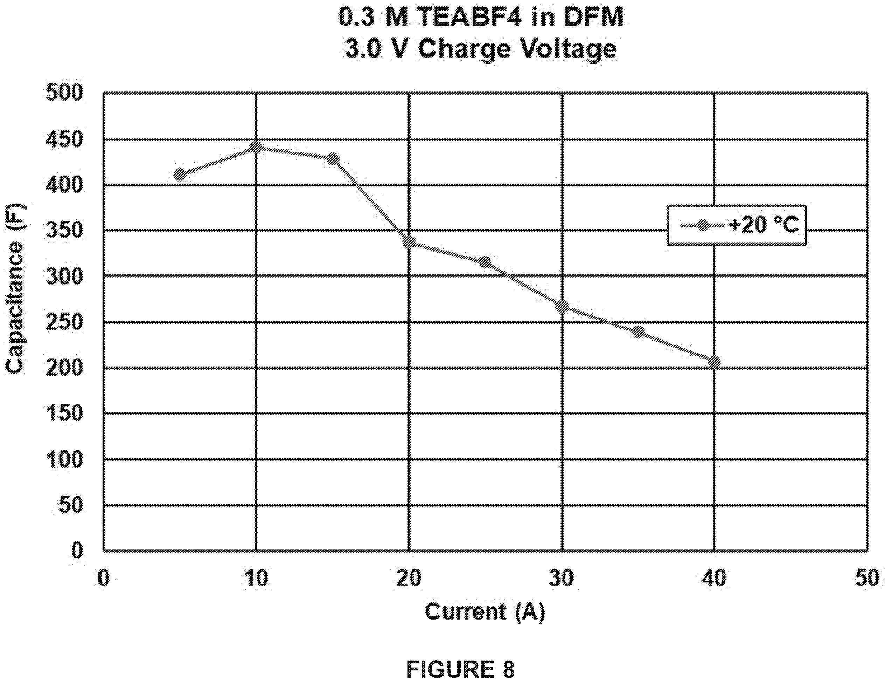

As a comparative test, an electrochemical capacitor device was tested with a liquefied gas electrolyte composed of 0.3 TEABF4 in difluoromethane (DFM). The device was tested at various discharge rates up to 40 A at +20 °C. There is significant drop in capacitance at increased levels of the discharge current. Capacitance vs. discharge current is shown in Figure 8. The cell performed very poorly with high DCR at extreme temperatures of -60 °C and +85 °C.

### EXAMPLE 4

As a comparative test, several electrochemical capacitor devices were tested with a liquefied gas electrolyte composed of 1.0 M SBPBF4 in DFM, 1.0M TBABF4 in DFM, 0.3 TEABF4 + 0.7M TBABF4 in DFM and 0.3M TEABF4 in difluoromethane (DFM). The DCR resistance was measured for each cell. The results of the test are shown in Table 2 below. Clearly, the cell with SBPBF4 salt in DFM had lowest the resistance of the cells tested at both +20 and -60 °C.

**TABLE 2**

| **DCR (mΩ)** | | |
|---|---|---|
| | **+20 °C** | **-60 °C** |
| 1.0 M SBPBF4 in DFM | 3.56 | 3.51 |
| 1.0 M TBABF4 in DFM | 4.54 | 6.6 |
| 0.3 M TEABF4 + 0.7 M TBABF4 in DFM | 3.7 | 7.4 |
| 0.3 M TEABF4 in DFM | 40 | - |

## Claims

1. An electrochemical capacitor device, comprising:
an ionically conducting electrolyte comprising a mixture of a compressed gas solvent and a solid salt, wherein the compressed gas solvent is difluoromethane with a vapor pressure above 100 kPa at a room temperature of 293.15 K;
a housing enclosing the ionically conducting electrolyte under a pressurized condition to maintain the compressed gas solvent at a pressure higher than 100 kPa at a room temperature of 293.15 K; and
at least two conducting electrodes in contact with the ionically conducting electrolyte;
wherein the salt is soluble to at least 1M in the liquified gas electrolyte at a temperature of +85 C
**characterized in that**:
the salt is spiro-(1,1')-bipyrrolidinium tetrafluoroborate. with a molar concentration of at least 1.0 M in the difluoromethane compressed gas solvent.

2. The electrochemical capacitor of Claim 1, wherein one or both electrodes are composed of a carbon material selected from the group consisting of: activated carbon, graphite, carbon black, graphene, and carbon nanotubes.

## Patentansprüche

1. Elektrochemische Kondensatorvorrichtung, mit:
einem ionenleitenden Elektrolyten, der eine Mischung aus einem komprimierten Lösungsmittel-Gas und ein festes Salz beinhaltet,
wobei das komprimierte Lösungsmittel-Gas Difluormethan mit einem Dampfdruck von mehr als 100 kPa bei einer Raumtemperatur von 293,15 K ist;
einem Gehäuse, das den ionenleitenden Elektrolyten unter Druck einschließt, um das komprimierte Lösungsmittel-Gas unter einem Druck von mehr als 100 kPa bei einer Raumtemperatur von 293,15 K zu halten; und
mindestens zwei leitfähige Elektroden, die mit dem ionenleitenden Elektrolyten in Kontakt stehen;
wobei das Salz in dem verflüssigten Gaselektrolyten bei einer Temperatur von +85 °C bis zu einer Konzentration von mindestens 1 M löslich ist,
**dadurch gekennzeichnet, dass**:
es sich bei dem Salz um Spiro-(1,1')-bipyrrolidinium-tetrafluoroborat mit einer molaren Konzentration von wenigstens 1.0 M in dem komprimierten Difluormethan-Lösungsmittel-Gas handelt.

2. Elektrochemischer Kondensator nach Anspruch 1, wobei eine oder beide Elektroden aus einem Kohlenstoffmaterial bestehen, das aus der Gruppe ausgewählt ist, die aus Aktivkohle, Graphit, Ruß, Graphen und Kohlenstoffnanoröhren besteht.

## Revendications

1. Dispositif condensateur électrochimique, comprenant :
un électrolyte à conduction ionique comprenant un mélange d'un solvant gazeux comprimé et d'un sel solide,
dans lequel le solvant gazeux comprimé est le difluorométhane avec une pression de vapeur supérieure à 100 kPa à une température ambiante de 293,15 K ;
un boîtier renfermant l'électrolyte à conduction ionique dans un état pressurisé pour maintenir le solvant gazeux comprimé à une pression supérieure à 100 kPa à une température ambiante de 293,15 K ; et
au moins deux électrodes conductrices en contact avec l'électrolyte à conduction ionique ;
dans lequel le sel est soluble à au moins 1 M dans l'électrolyte gazeux liquéfié à une température de +85°C
**caractérisé en ce que**,
le sel est le tétrafluoroborate de spiro-(1,1')-bi-pyrrolidinium avec une concentration molaire d'au moins 1,0 M dans le solvant gazeux comprimé de difluorométhane.

2. Condensateur électrochimique selon la revendication 1, dans lequel une ou les deux électrodes sont composées d'un matériau de carbone sélectionné dans le groupe constitué : de charbon actif, de graphite, de noir de carbone, de graphène et de nanotubes de carbone.
